# NEUE EUROPÄISCHE PATENTSCHRIFT

(11) **EP 0 450 133 B2**
(45) Veröffentlichungstag und Bekanntmachung des Hinweises auf die Entscheidung über den Einspruch: **18.03.1998**
(45) Hinweis auf die Patenterteilung: 23.02.1994
(21) Anmeldenummer: 90108398.0
(22) Anmeldetag: 04.05.1990
(51) Int. Cl.: B65G 45/16

(54) **Förderbandabstreifer mit segmentiertem Schaber**
Conveyor belt scraping device with segmented scraper
Racleur à raclette segmentée pour bande transporteuse

(30) Priorität: 04.04.1990 DE 4010790
(43) Veröffentlichungstag der Anmeldung: 09.10.1991
(73) Patentinhaber: Schulmeistrat, Hans-Dieter, 46354 Südlohn (DE)
(72) Erfinder: Schulmeistrat, Manfred, D-4650 Gelsenkirchen-Buer (DE); Schulmeistrat, Hans-Dieter, D-4286 Südlohn (DE)
(74) Vertreter: Hallermann, Dietrich-Otto, Dipl.-Ing. Patentassessor

(56) Entgegenhaltungen:
- EP-A- 0 090 985
- DE-A- 3 620 960
- DE-A- 3 831 033
- US-A- 2 393 724
- US-A- 2 398 821
- US-A- 3 101 837
- US-A- 3 674 131
- US-A- 4 633 999
- US-A- 4 696 389

## Beschreibung

Die Erfindung betrifft einen Förderbandabstreifer mit segmentiertem Schaber, an welchen die Schabersegmente gegen den Fördergurt tangential an der Abwurftrommel unterhalb der Abwurfparabel angeordnet sind.

Förderbandabstreifer gemäß der Erfindung werden an Gurtbändern verwendet, um Anbacken des Fördergutes von dem ablaufenden Obergurt abzustreifen. Sie werden daher tangential an der Abwurftrommel unterhalb der Abwurfparabel des Fördergurtes eingesetzt. Das Abstreifen des anbackenden Fördergurtes besorgen die Schaber, welche je nach Art des Fördergutes bzw. seiner Haftkräfte auf dem Gurt aus unterschiedlichem Werkstoff, wie Hartmetall, Hartgummi, Keramik o.dgl. bestehen.

Die Segmentierung des Schabers bedeutet die Aufteilung in Querrichung des Gurtes auf einzelne Schabersegmente und stellt eine erste Annäherung an die Tatsache dar, daß die Menge des anhaftenden Fördergutes sowie die Verteilung der Haftkräfte über die Gurtbreite nicht konstant ist, was u.a. mit der unterschiedlichen Beladungshöhe in Querrichtung des Gurtes zusammenhängt. Die auf den Torsionsfedern gelagerten Schabersegmente können daher einzeln ausweichen, was in Laufrichtung des Fördergurtes geschieht, so daß sich die Trennkräfte der Schaber auf das anhaftende Fördergut mit dessen Menge und Haftwiderstand vergrößern, während andere Schabersegmente die damit verbundene erhöhte mechanische Beanspruchung des Fördergurtes nicht mitzumachen brauchen. Da sich Unebenheiten der Oberfläche des Fördergurtes ebenso verhalten, hat die Segmentierung den Vorteil, daß Flicken, Quernähte o.dgl. die Wirkung der Schaber nicht beeinträchtigen.

Die Anordnung der Schabersegmente auf einer Traverse gewährleistet die Ausdehnung der Reinigungswirkung über die gesamte Fördergurtbreite, so daß auch geringe Verschmutzungen an den Rändern des Füllquerschnittes abgestreift und das Untertrum und die Umkehre der Förderanlage sauber gehalten werden. Die Winkelverstellbarkeit der Traverse läßt die Montage auf oder an dem Bandtraggerüst zu, weil erst nach Fertigstellung dieser Hauptarbeit die richtige Betriebsstellung der Schaber eingestellt werden kann. Außerdem ist es damit möglich, den Verschleiß der Schaber auszugleichen, der mit der mechanischen Reinigung des Fördergurtes verbunden ist. Hierbei ergibt sich aus der Segmentierung des Schabers auch die Möglichkeit, den ungleichmäßigen Verschleiß der Schabersegmente über die Gurtbreite gesehen durch Auswechseln einzelner Schaber zu berücksichtigen.

Die Erfindung schließt sich an derart leistungsfähige und fortgeschrittene Förderbandabstreifer an, die sie als bekannt voraussetzt. Hierbei sind die Schabersegmente an Blöcken aus elastischen bzw. elastischem Werkstoff unmittelbar befestigt, welche die eingangs erwähnten Torsionsfedern bilden. Diese Blöcke sind formschlüssig auf der Traverse befestigt, die deswegen keinen polygonalen Umriß aufweist, jedoch in außenzylindrischen Achsstummeln endet, welche in innenzylindrischen Lagerböcken stufenlos winkelein- und -feststellbar sind, um einerseits die Winkelstellung der Schabersegmente und andererseits die Vorspannung der Torsionsfedern zu ermöglichen.

Obwohl solche Förderbandabstreifer auf den flach liegenden Fördergurt einwirken, wodurch mit der gemeinsamen Winkelverstellung der Schabersegmente und der Einstellung der Torsionsfedern über die Traverse die Anlage aller Schabersegmente an den Fördergurt gewährleistet ist, führen doch die Inhomogenität der Menge und der Haftkräfte des anhaftenden Fördergurtes über die Gurtbreite, sowie die Unebenheiten des Fördergurtes zur ungleichmäßigen Belastung der Schabersegmente, der keine entsprechende Einstellung der Torsionsfedervorspannung gegenübersteht. Das zwingt zur Einstellung der Torsionsfedervorspannung, die in der Regel eine zu starke Einwirkung an den Rändern des Füllquerschnittes mit dem damit verbundenen Gurtverschleiß und eine zu geringe Reinigungswirkung in der Gurtmitte auslöst.

Eine weitere Schwierigkeit ergibt sich aus der Belastung der Torsionsfedern. Denn die sich bildenden Federblöcke liegen frei und werden deshalb nicht nur auf Verdrehen, sondern auch mit allen anderen Kräften belastet und ausgelenkt, welche von den Schabersegmenten ausgehen. An den Schabersegmentkanten entwickeln sich vielfach auch Druck- und Zugkräfte. insbesondere wenn die Schaber tangential an dem der Abwurftrommel aufliegenden Fördergurt eingesetzt werden. Das führt nicht nur zu erhöhtem Schaberverschleiß, sondern u.U. auch zum Mitziehen der Schabersegmente in Längsrichtung des Gurtes, was bei entsprechenden mechanischen Widerständen der Schabersegmente auf dem Fördergurt deren Zerstörung bedeuten kann.

Der bei einem anderen bekannten Förderbandabstreifer (DE-A-3831033) vorgesehene Einschluß der Torsionsfedern jeweils in ein Federgehäuse vermindert die Ausweichmöglichkeiten der Federblöcke gegen andere als verdrehend wirkende Kräfte auf ein Minimum und erlaubt daher die Verminderung des Faserverschleißes und der Einzugsgefahr bei gleichzeitig verminderter Menge an elstischem bzw. elastomeren Torsionsfedermaterial. Die Anordnung der Torsionsfedergehäuse auf Lagerschalen erlaubt die individuelle Einstellung der Vorspannung jeder Torsionsfeder eines Schabersegmentes, wodurch sich die Möglichkeit einer Anpassung an die Gurtbreite und an die durch die beschriebenen Inhomogenitäten des Fördergutes und seiner Haftkräfte bedingten örtlichen Verhältnisse und Betriebsbedingungen ergibt, die u.a. durch unterschiedliches Fördergut verändert werden. Das geschieht in erster Linie durch die Wahl der Bogenwinkel der Lagerschalen um die Traverse.

Bei einem ebenfalls vorbekannten Förderbandabstreifer (EP-A-0 090 985). ist der Weg, den die Schaber unter dem Einfluß der nunmehr besser eingestellten Torsionsfedern zurücklegen können, durch den Untergurt begrenzt, dem sich die Schabersegmente von unten anlegen. Damit die Schaber nicht in Laufrichtung des Gurtes mitgerissen werden können, muß die Anordnung außerdem so getroffen werden, daß die Auslenkung der Schaber durch den Mitnahmeeffekt des Gurtes vom Gurt weggerichtet ist. Der vorbekannte Abstreifer ist daher für andere Bereiche des Gurtes ungeeignet, die die Schaber anders belasten.

Der Erfindung liegt die Aufgabe zugrunde, die Anpassung eines Förderbandabstreifers der eingangs erläuterten allgemeinen Bauart an die unterschiedlichen Belastungen weiter zu verbessern.

Diese Aufgabe löst die Erfindung mit den Merkmalen des Anspruches 1. Ausgestaltungen der Erfindung sind Gegenstand der Unteransprüche.

Der hierbei vorgesehene gemeinsame Anschlag der Schabersegmente begrenzt die Auslenkmöglichkeiten der Schabersegmente. Dadurch wird einerseits ein Verschleißausgleich ohne Nachstellen der Lagerschalen über einen gewissen Bereich möglich, andererseits aber verhindert, daß die Schaber in Laufrichtung des Gurtes mitgerissen werden können.

Mit Rücksicht auf die Begrenzung der Federauslenkung auf verdrehende Beanspruchungen ist es zweckmäßig, das Federmaterial in seiner Menge möglichst gering zu halten. Das ermöglichen die Merkmale des Anspruches 2. Da hierbei die Federn zwischen den Profillinien der Achse und dem Innenprofil des Federgehäuses eingespannt sind. reagiert die elastomere Federmasse. wie von der Erfindung angestrebt, praktisch nur auf verdrehend wirkende Kräfte.

Je nach den örtlichen Bedingungen ist es sinnvoll, den vollen Bereich der Einstellmöglichkeiten zu eröffnen, welcher durch die Lagerschalen gegeben ist. Dies geschieht mit Hilfe der Merkmale des Anspruches 3. Durch die besondere Ausbildung der Traverse als Rundling und der Lagerschalen als höhere Segmente lassen sich die Bogenwinkel der Lagerschalen stufenlos ver- und mit Hilfe der radialen Feststellschrauben einstellen.

Der erfindungsgemäß gemeinsame Anschlag der Schabersegmente kann mechanisch wirken. Eine Möglichkeit eröffnen die Merkmale des Anspruches 4. Hierbei ergibt sich eine einfache Ausbildung durch die Abstützung der Träger der Schabersegmente auf einer Querstange, die allon Schabersegmenten gemeinsam ist und die Anschlagkräfte auf die Traverse überträgt, von der sie an dem Bandtraggerüst abgetragen werden.

Die Einzelheiten, Merkmale und andere Vorteile der Erfindung ergeben sich aus der nachfolgenden Beschreibung einer Ausführungsform anhand der Figuren in der Zeichnung; es zeigen
- Fig. 1: eine Stirnansicht des Förderbandabstreifers gemäß der Erfindung,
- Fig. 2: eine Draufsicht auf den Gegenstand der Fig. 1,
- Fig. 3: in abgebrochener Darstellung eine Seitenansicht des Gegenstandes der Fig. 1 und 2,
- Fig. 4: eine Seitenansicht der Traverse des unteren Teiles der Fig. 1,
- Fig. 5: einen Schnitt längs der Linie V-V der Fig. 1,

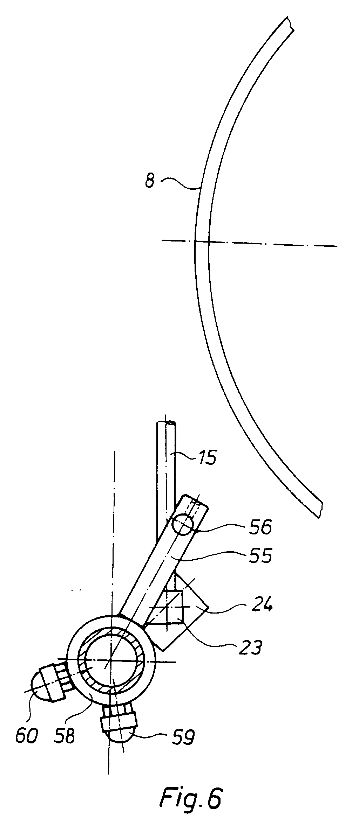

- Fig. 6: einen Schnitt längs der Linie VI-VI der Fig.1 und
- Fig. 7: einen Schnitt längs der Linie VII-VII der Fig. 1.

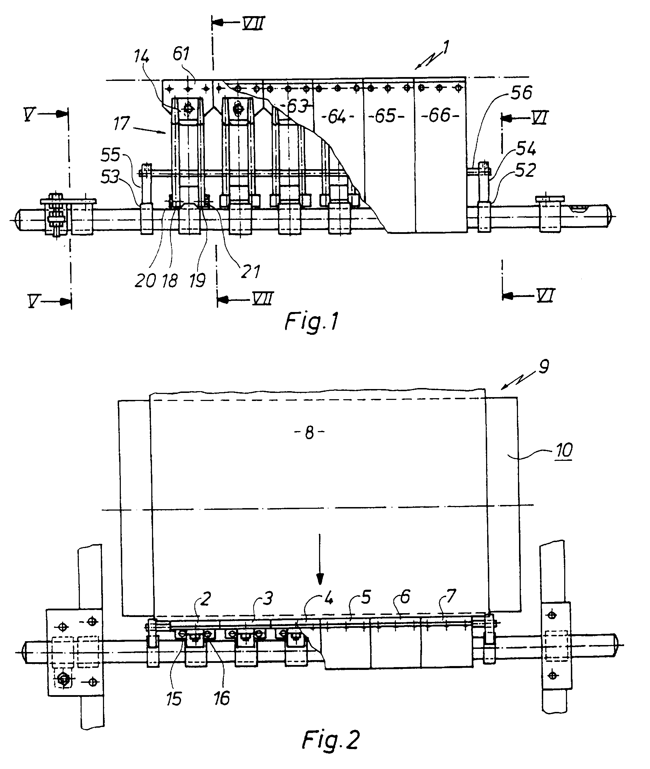

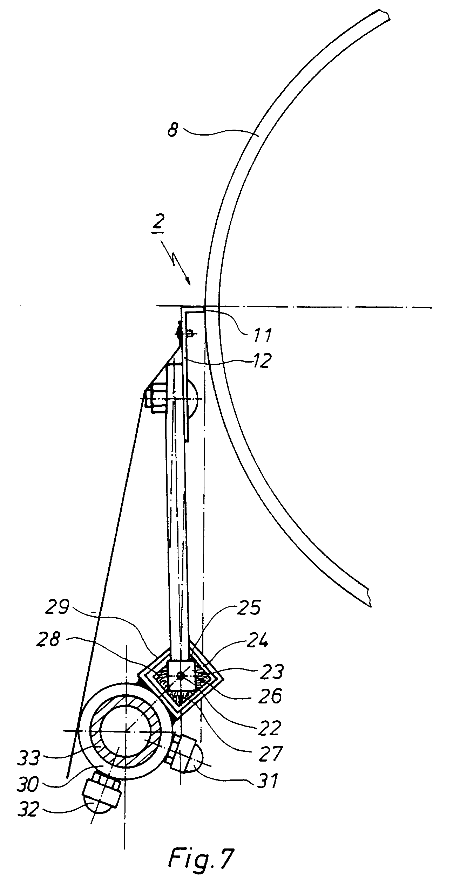

Der in Fig. 1 dargestellte und allgemein mit 1 bezeichnete Förderbandabstreifer ist auf mehrere Segmente 2-7 (Fig 2) aufgeteilt, die identisch ausgebildet sind .Die Laufrichtung des Obergurtes (8) einer Förderbandanlage 9 gemäß dem Pfeil in Fig. 2 um eine Abwurftrommel 10 ist so gewählt, daß sich der Förderbandabstreifer unterhalb der Abwurfparabel des Fördergurtes tangential auf dem Gurt befindet. Wie sich aus der Darstellung der Fig. 7 ergibt, besteht jedes Segment, wie am Beispiel des Segmentes 2 gezeigt, aus einem Winkelblech, dessen kurzer Schenkel 11 mit seiner freien Kante auf den Gurt 8 einwirkt und dessen längerer Schenkel 12 auf einem Querblech 14 abgestützt ist, welches die parallelen Zinken 15, 16 einer Gabel 17 verbindet. Die freien Enden 18, 19 (Fig. 1) der Gabelzinken 15, 16 sitzen in Blöcken 20, 21 (Fig. 1 und 7). Aus den Zeichnungen nicht erkennbare, in die Blöcke von außen eingedrehte und zugängliche Madenschrauben erlauben eine stufenlose Ein- und Feststellung der Zinkenlänge. Die Blöcke sind drehfest auf einer Achse 22 befestigt, welche einen polygonalen Mittelabschnitt 23 aufweist. Dieser weist ebenso wie die Blöcke 20, 21 einen quadratischen Umriß auf und liegt diagonal in einer Federbüchse 24. Die Federbüchse ist eine Hülse, welche einen dem Querschnitt 23 entsprechenden lichten Innenraum aufweist, dessen vier Ecken mit Blöcken 25-27 aus elastomerem Werkstoff, wie z.B. Hart- oder Weichgummi ausgefüllt sind. Das Ganze bildet eine Torsionsfeder gegen Drehungen um die Achse 22. Die Torsionsfeder liegt mit ihrem Gehäuse in einem radialen Hohlkörper 29, der einen dem Außenumriß des Torsionsfedergehäuses 24 entsprechenden Innenquerschnitt aufweist. Demzufolge kann sich das Torsionsfedergehäuse 24 in dem radialen Fortsatz 29 nicht drehen.

Der Fortsatz 29 ist auf eine Lagerschale 30 aufgeschweißt, die gemäß der dargestellten Ausführungsform mit Hilfe von Radialschrauben 31, 32 über Hutsechskantköpfe auf einer Traverse 33 einstellbar sind. Bei gelösten Schrauben 31, 32 können die Bogenwinkel der Lagerschalen 30 um die Traverse 33 jedes Abstreifersegmentes 2-7 individuell, d.h. einzeln eingestellt werden. In der gewählten Stellung lassen sich die Lagerschalen 30 mit Hilfe der Schrauben 31, 32 feststellen.

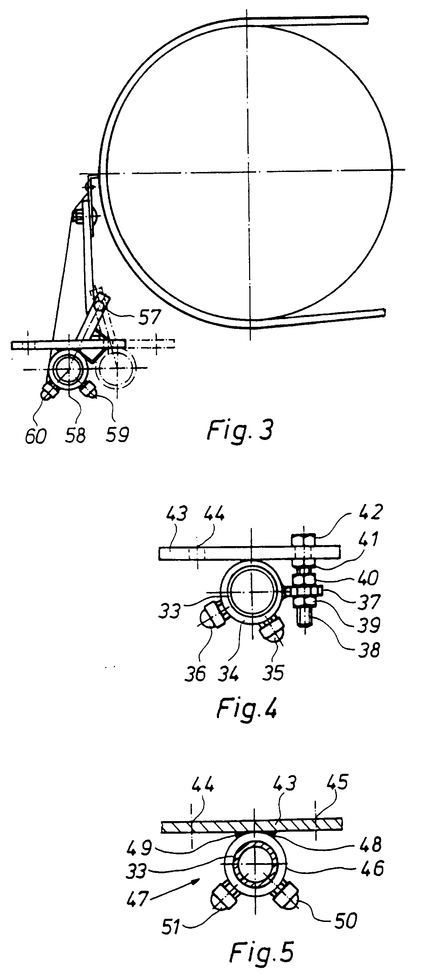

Die Traverse trägt auf jedem ihrer Enden (Fig. 4) ein Hüllrohrsegment 34 mit zwei bogenversetzt angeordneten Feststellschrauben 35, 36, welche ebenfalls mit Hutköpfen versehen sind. Das Hüllrohr 34 weist einen angeschweißten Flacheisenarm 37 auf, den eine Spindel 38 durchdringt. Mit Hilfe einer Mutter 39 und einer Kontermutter 40 läßt sich die Spindel mit dem Flacheisenarm 37 verspannen. Die Spindel bildet einen mit einem Außengewinde versehenen Bolzen, dessen Sechskantkopf 42 einem Flacheisen 43 anliegt, welches bei 44 zur Verschraubung mit dem Bandtraggerüst 45 vorbereitet ist. Eine Kontermutter 41 dient zur Einspannung des Flacheisens 43. Nach Lösen der Mutter 39 läßt sich das Hüllrohr 34 zusammen mit der Traverse in Richtung des Doppelpfeiles der Fig. 4 einstellen und verstellen. Die in Fig. 4 dargestellte Vorrichtung braucht jedoch nur an einem Ende der Traverse 33 vorgesehen werden.

Dagegen sind die ebenfalls aus Hüllrohrabschnitten 46 bestehenden Lagerböcke 47 der Traverse 33 an beiden Traversenenden vorgesehen. Diese Lagerböcke sind mit Kehlnähten 48, 49 auf die Flacheisenabschnitte 43 aufgeschweißt und tragen ihrerseits bogenversetzt zwei Feststellschrauben 50, 51 mit Hutköpfen. Mit diesen Schrauben wird die Bogenwinkeleinstellung der Traverse (33) nach Fig. 4 festgestellt.

Auf weiteren Hüllrohrabschnitten 52, 53 sitzt an Armen 54, 55 eine zur Begrenzung der Torsionsfederauslenkung dienende Querstange 56. Sie bildet in Laufrichtung des Gurtes eine Abstützung der Gabelzinken 15, 16, wie sich aus der Darstellung der Fig. 3 ergibt. Hierzu ist der von der Querstange 56 gebildete Anschlag 57 seinerseits auf einem Hüllrohr 58 der Traverse angeordnet, welches mit Hilfe zweier Feststellschrauben 59, 60 auf der Traverse festgestellt werden kann. Auf diese Weise läßt sich der am Anschlag 57 gewählte Bogenwinkel um die Traverse festlegen. Die Einstellung erfolgt, um Gurtschäden bei Verschleiß der Segmente 2-7 zu verhindern.

Auf der Rückseite 61 der Schabersegmente 2-7 sind Lappen, wie bei 63-66 in Fig. 1 für die Schabersegmente 4-7 dargestellt, befestigt. Sie dienen als Prallvorrichtungen für das abgeschabte Fördergut und lenken die Partikel nach unten ab.

## Patentansprüche

1. Förderbandabstreifer mit segmentiertem Schaber, dessen aus Winkelblechen (11, 12) bestehenden und mit der freien Kante des kürzeren Schenkels des Winkelblechs (11) gegen den Fördergurt (8) einwirkendenden Segmente (2-7) einzeln mit Torsionsfedern (24; 25-28) gegen den Fördergurt (8) an der Abwurftrommel (10) unterhalb der Abwurfparabel verspannt und auf einer winkelverstellbaren Traverse (33) auf dem Bandtraggerüst gelagert sind, wobei die Torsionsfedern (24; 25-28) in Gehäusen (29) eingeschlossen sind, die mit Lagerschalen (30) zur winkelverstellbaren Befestigung auf der Traverse (33) verschweißt sind und die Bogenwinkel der Lagerschalen (30) um die Traverse (33) einzeln ein- und feststellbar sind, wobei für die tangential zu dem um eine Abwurftrommel (10) laufenden Gurt (8) angeordneten Segmente (2-7) eine Abstützung (56) vorgesehen ist, die in Laufrichtung des Gurtes (8) angeordnet und um die Traverse (33) winkelverstellbar ist und einen die Torsionsfederauslenkung und somit die Auslenkmöglichkeit der Segmente (2-7) in Richtung auf den Gurt (8) begrenzenden und die Mitnahme der Segmente (2-7) durch den Gurt (8) verhindernden gemeinsamen Anschlag bildet.

2. Förderbandabstreifer nach Anspruch 1, dadurch gekennzeichnet, daß die Schabersegmente (2-7) auf Gabeln (15, 16) mit einer profilierten Achse (22, 23) befestigt sind, welche das Torsionsfedergehäuse (24) durchsetzt.

3. Förderbandabstreifer nach einem der Ansprüche 1 oder 2, dadurch gekennzeichnet, daß die Traverse (33) als Rundling und die Lagerschalen (30) als Hüllrohrsegmente ausgebildet sind, welche stufenlos ein- und mit Hilfe von radialen Feststellschrauben (31, 32) auf der Traverse (33) feststellbar sind.

4. Förderbandabstreifer Anspruch 2 oder 3, dadurch gekennzeichnet, daß der zur Begrenzung der Torsionsfederauslenkung dienende Anschlag (57) eine die Gabelzinken (15, 16) abstützende Querstange (26) aufweist, welche auf Armen (54, 55) von Außenlagern (52, 53) der Traverse (33) befestigt und auf dieser winkelverstellbar ist.

5. Förderbandabstreifer nach einem der Ansprüche 2 bis 4, dadurch gekennzeichnet, daß die Torsionsfedergehäuse (24) drehfest in axialen Hohlkörpern (29) untergebracht sind, welche an den Lagerschalen (30) befestigt sind.

6. Förderbandabstreifer nach einem der Ansprüche 2 bis 5, dadurch gekennzeichnet, daß der das Federgehäuse (24) durchsetzende Mittelabschnitt der Gabelachse (26) einen viereckigen Umriß aufweist und diagonal im viereckigen Umriß des Federgehäuses (24) untergebracht ist, in dessen vier Ecken sich Federblöcke (25-28) auf dem Federgehäuse und der Achse abstützen.

## Claims

1. A conveyor belt scraping device with segmented scraper, the segments (2-7) of which, which are formed by angular plates (11) engaging the conveyor belt webbing (8) by means of the free edge of the shorter leg of the angular plate (11), are individually braced by means of torsion springs (24;25-28) against the conveyor belt webbing (8) of the discharge drum (10) below the discharge parabola and are located on an angularly adjustable cross-girder (33) on the belt support framework, wherein the torsion springs (24;25-28) are enclosed within casings (29) which are welded to locating bushes (30) for angle-adjustable attachment to the cross-girder (33), whereby the arc angles of the locating bushes (30) around the cross-girder (33) can be individually adjusted and securely set, wherein a support (36) is provided for the segments (2-7) located at a tangent to the webbing (8) moving around the discharge drum (10), which support is positioned in the operating direction of the webbing and is angularly adjustable around the cross-girder (33) in such a way that it forms a combined checking ledge limiting the deflexion of the torsion springs and thus the possible deflexion of the segments (2-7) towards the webbing (8) and avoiding the displacement of the segments (2-7) by the webbing (8).

2. A conveyor belt scraping device according to claim 1, **characterised in that** the scraper segments (2 - 7) are attached by shafts (15, 16) to a shaped axle (22, 23) extending into the torsion spring casing (24).

3. A conveyor belt scraping device according to one of the claim 1 or 2, **characterised in that** the cross-girder (33) is constructed as a circular-shaped component and the locating bushes (30) are constructed as sheathing pipe segments which are variably adjustable and, with the help of radial locating screws (31, 32), can be securely set onto the cross-girder (33).

4. A conveyor belt scraping device according to claim 2 or 3, **characterised in that** the checking ledge (57), serving to define the torsion spring operation, comprises a cross-bar (26) which supports the shaft prongs (15, 16) and is attached to brackets (54, 55) of lower bearings (52, 53) of the cross-girder (33) on which its angle can be adjusted.

5. A conveyor belt scraping device according to any one of the claims 2 to 4, **characterised in that** the torsion spring casings (24) are tightly housed in axial hollow components (29) which are attached to the locating bushes (30).

6. A conveyor belt scraping device according to any one of the claims 2 to 5, **characterised in that** the central section of the shaft axle (26) extending into the spring casing (24) has a square outline and is housed diagonally within the square outline of the spring casing (24) in the four corners of which spring blocks (25 - 28) are supported between the spring casing and the axle.

## Revendications

1. Racleur pour bande de convoyage, comprenant un racloir à segments, dont les segments (2,7), qui sont formés par des tôles pliées (11,12) et qui agissent sur la bande de convoyage (8) avec l'arête libre du côté plus court de la tôle pliée (11), sont précontraints individuellement au moyen de ressorts de torsion (24;25-28) contre la bande de convoyage (8) à l'endroit du tambour de décharge (10) sous la parabole de décharge et sont montés de façon à pouvoir être ajustés angulairement sur une traverse (35) sur le châssis (33) porteur de la bande, les ressorts de torsion (24;25-28) étant enfermés dans des boîtiers (29) qui sont soudés à des coupelles de palier (30) pour la fixation à ajustage angulaire sur la traverse (33), et les angles des arcs des coupelles de palier (30) autour de la traverse (3) pouvant être réglés et fixés individuellement, un support (56) étant prévu pour les segments (2-7) agencés tangentiellement à la bande (81) qui circule autour du tambour de décharge (10), lequel support est agencé dans la direction de déplacement de la bande (8) et peut être réglé angulairement autour de la traverse (33) de telle sorte qu'il forme une butée commune (57) qui limite la déflexion des ressorts de torsion, et ainsi la déflexion des segments (2-7) vers la bande (8), et empêche l'entraînement des segments (2-7) par la bande (8).

2. Racleur pour bande de convoyage selon la revendication 1, caractérisé en ce que les segments de racloir (2-7) sont fixés sur des fourches (15, 16) avec un axe profilé (22, 23) qui traverse le boîtier (24) des ressorts de torsion.

3. Racleur pour bande de convoyage selon l'une des revendications 1 ou 2, caractérisé en ce que la traverse (33) est réalisée sous la forme d'un élément tubulaire et les coupelles de palier (30) sont réalisées sous la forme de segments tubulaires enveloppe, qui peuvent être réglés de façon continue et fixés sur la traverse (33) à l'aide de vis de fixation radiales (31, 32).

4. Racleur pour bande de convoyage selon la revendication 2 ou 3, caractérisé en ce que la butée (57) qui sert à limiter la déflexion des ressorts de torsion comprend une barre transversale (26) qui supporte les dents (15, 16) des fourches, ladite barre étant fixée sur des bras (54, 55) de paliers extérieurs (52, 53) de la traverse (33) et étant réglables angulairement sur ceux-ci.

5. Racleur pour bande de convoyage selon l'une des revendications 2 à 4, caractérisé en ce que les boîtiers (24) des ressorts de torsion sont logés solidairement en rotation dans des corps creux axiaux (29) qui sont fixés sur les coupelles de palier (30).

6. Racleur pour bande de convoyage selon l'une des revendications 2 à 5, caractérisé en ce que le tronçon central de l'axe (26) des fourches qui traverse le boîtier (24) des ressorts a un profil rectangulaire et est logé dans le profil rectangulaire du boîtier (24) des ressorts, des blocs à ressort (25-28) s'appuyant dans les quatre coins sur le boîtier des ressorts et sur l'axe.
